# EUROPEAN PATENT SPECIFICATION

(11) **EP 3 822 719 B1**
(45) Date of publication and mention of the grant of the patent: **06.11.2024**
(21) Application number: 19834953.2
(22) Date of filing: 18.06.2019
(51) Int. Cl.: G05B 19/042, G06F 8/36

(54) **PROGRAM DEVELOPMENT DEVICE AND CONTROLLER**
PROGRAMMENTWICKLUNGSVORRICHTUNG UND STEUERGERÄT
DISPOSITIF DE DÉVELOPPEMENT DE PROGRAMME ET DISPOSITIF DE COMMANDE

(30) Priority: 13.07.2018 JP 2018133408
(43) Date of publication of application: 19.05.2021
(73) Proprietor: OMRON Corporation, Shiokoji-dori, Shimogyo-ku, Kyoto-shi Kyoto 600-8530 (JP)
(72) Inventor: SHIMAMURA, Junji, Kyoto 619-0283 (JP)
(74) Representative: Becker, Eberhard
(86) International application number: PCT/JP2019/023992
(87) International publication number: WO 2020/012881

(56) References cited:
- JP-A- 2002 099 311
- JP-A- 2002 132 307
- JP-A- 2008 282 362
- JP-A- 2008 282 362
- US-A1- 2013 185 620
- US-A1- 2016 147 638

## Description

### BACKGROUND

### Technical Field

The invention relates to a program development device and a controller.

### Description of Related Art

The command words (individual codes in the program source) used for motion control of machines such as PLCs (Programmable Logic Controllers), machine tools, and robots may be standardized or systematized respectively for use. A code conforming to IEC61131-3 (JIS B 3503) is, for example, a command word for PLC. In addition, a G code used in CNC (Computer Numerical Control) is also standardized by ISO and can be used as a command word.

Conventionally, PLCs and machine tools have a configuration that does not allow the user to change the processing content of a command word or add a new command word in order to guarantee the operation.

Therefore, for PLC, there is a technique that converts a part of a user program into a library and saves it in a unit so as to implement the user's know-how in the user program and improve the reusability of the user program (for example, see Japanese Patent Gazette "specification of Patent No. 35488829" and Japanese Patent Gazette "specification of Patent No. 4973867").

US 2016/147638 A1 proposes an engineering tool including a program display/editing unit that edits an official program to be run as an actual product and a debugging program to be used at the time of operation confirmation of the official program distinctively in such a manner that the debugging program is executed by a controller when the debugging program is selected and that the official program is executed by the controller without the debugging program being executed when the debugging program is not selected. US 2013/185620 A1 proposes a ladder program creation apparatus including a command listing table storage unit configured to store a command listing table, the command listing table registering standard command information and custom ladder command information, a custom ladder command information creation unit configured to create the custom ladder command information based on an operation by user, and a custom ladder command information storage control unit configured to register the custom ladder command information, which has been created by the custom ladder command information creation unit, and the standard command information in the command listing table. JP 2008 282362 A proposes an identification data generation part updating identification data stored in a program when a program for a PLC is changed. The identification data are stored in a previous data storage part when uploading the program to the PLC. Thus, when a program collation part compares the identification data downloaded by the PLC with the identification data stored in the previous data storage part, it is determined after uploading whether or not the program in the PLC has been updated by anyone else. JP 2002 132307 A proposes a motion controller which has motion instructions for a text, a picture, etc., has motion instruction executing processes separately at an analysis part, an arithmetic part, an input/output part, and a resident part, and freely combines them to enable arbitrary operation having no restriction condition.

### SUMMARY

### Problems to be Solved

However, in the technique described in Japanese Patent Gazette "specification of Patent No. 35488829" or Japanese Patent Gazette "specification of Patent No. 4973867", in order to prevent the firmware or operating system from losing control or being deadlocked due to unauthorized use of the API provided by the firmware or operating system, the user could create a library of a user program using the command words provided by the manufacturer. The library is a user program written in IEC61131-3 that is made into a component in the form of a function block or a function, and can improve the reusability of the program or conceal the user program. However, the command words provided by the manufacturer may have functional restrictions in order to guarantee the operation, so the functions that can be realized with the library, which is a combination of command words, are limited, and the user cannot make changes as desired.

One aspect of the invention has been made in view of the above circumstances, and one aspect of the invention is to provide a technique that allows the user to change the processing content of a command word used for the motion control of a machine and add a new command word, thereby realizing a new function not defined by the manufacturer.

### Means for Solving the Problems

The present invention is provided by the appended claims. The following disclosure serves a better understanding of the present invention. In the following description, any embodiments referred to and not falling within the scope of the appended claims are merely examples useful for the understanding of the invention. To solve the above problems, a program development device according to one aspect of the invention is for creating a user program operating on a controller that controls motion of a machine. The program development device includes a first storage unit that stores a default first motion control command in association with a command word; and an editing unit that edits a motion control command corresponding to the command word according to an instruction of a user.

To solve the above problems, a controller according to one aspect of the invention is for controlling motion of a machine according to a user program. The controller includes an execution unit that executes the user program; a first command library that stores an execution code of a default first motion control command corresponding to a command word; and a second command library that stores an execution code of a second motion control command, which is defined by a user, corresponding to the command word. The execution unit decides whether to call the execution code of the first motion control command or the execution code of the second motion control command according to the user program.

### Effects

According to one aspect of the invention, the user can change the processing content of a command word used for the motion control of a machine and add a new command word.

### BRIEF DESCRIPTION OF THE DRAWINGS

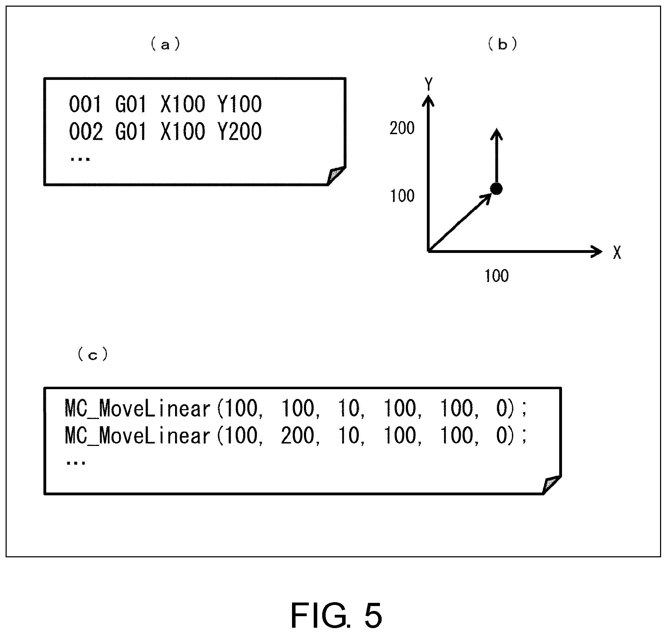

FIG. 1 is a block diagram showing a schematic configuration of a system environment in which the program development device and the controller according to an embodiment of the invention are used.
FIG. 2 is a block diagram showing a main configuration of the controller.
FIG. 3 is a block diagram showing a main configuration of the program development device.
FIG. 4 is a comparison table showing codes based on each standard and default processing contents thereof.
(a) of FIG. 5 shows an example of a user program using G codes, (b) of FIG. 5 is a diagram showing a locus of movement of a tool of a machine tool according to the user program shown in (a) in an XY coordinate system, and (c) of FIG. 5 shows an example of a user program using codes conforming to IEC61131-3.

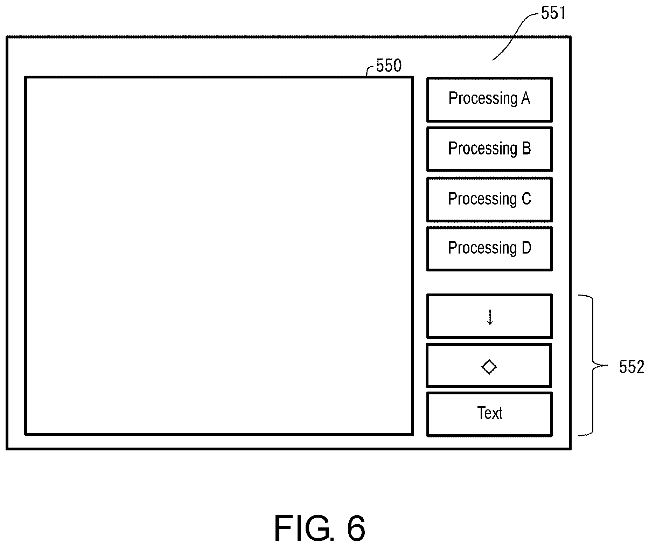

FIG. 6 is a diagram showing an example of a display screen of the program development device.

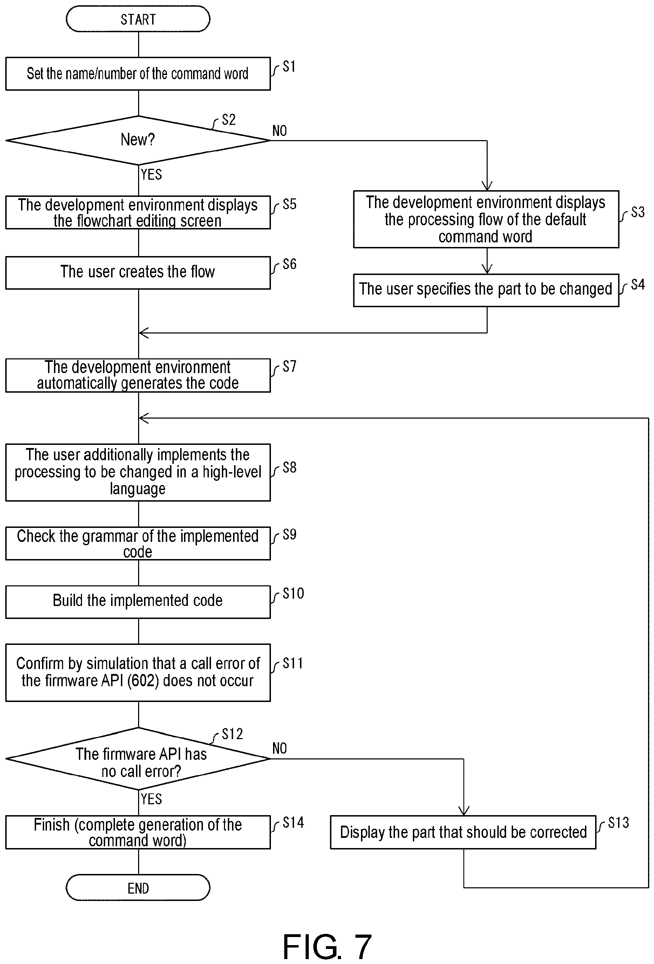

FIG. 7 is a flowchart showing a flow of editing of a processing flow.

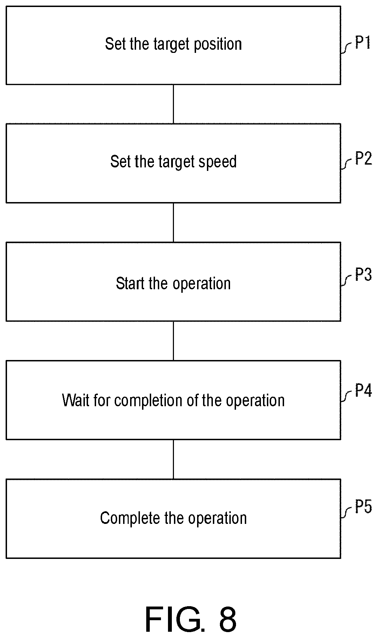

FIG. 8 is a diagram showing an example of a default processing flow.

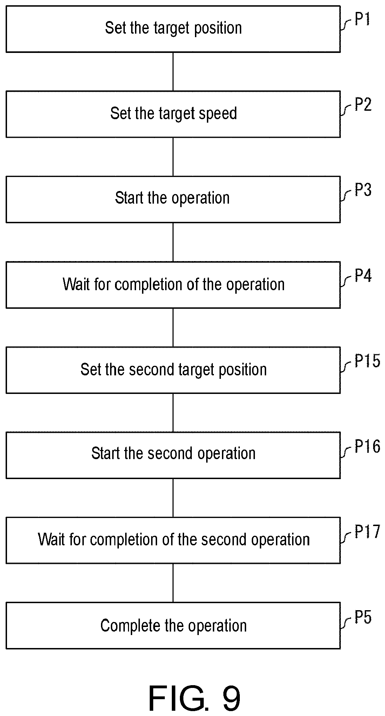

FIG. 9 is a diagram showing an example of a user-defined processing flow.

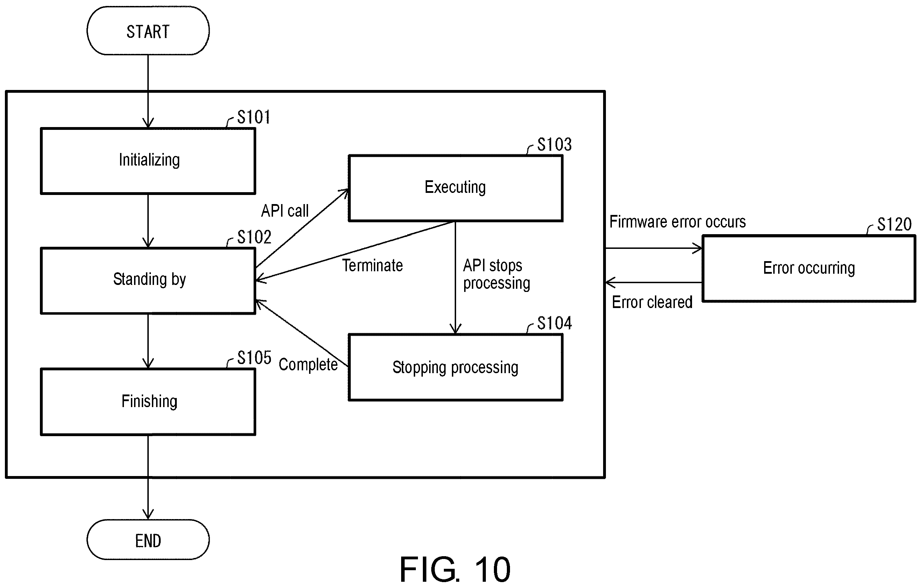

FIG. 10 is a diagram showing a flow of processing of a firmware API.

### DESCRIPTION OF THE EMBODIMENTS

Hereinafter, an embodiment according to one aspect of the invention (hereinafter, also referred to as "the present embodiment") will be described with reference to the drawings.

### §1 Application example

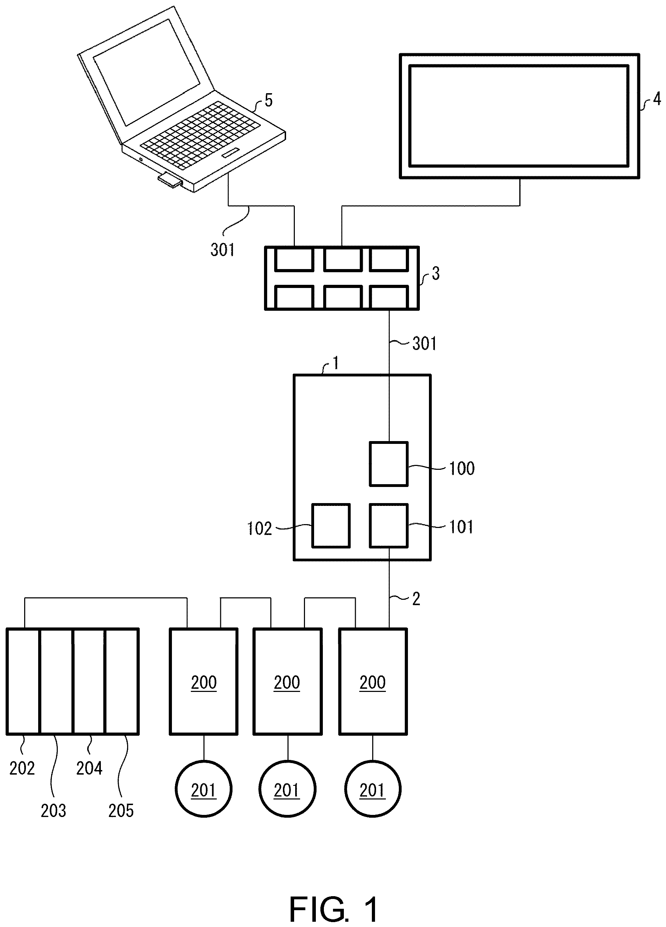

First, an example of a situation to which the invention is applied will be described with reference to FIG. 1. FIG. 1 is a diagram showing an outline of a system environment in which a program development device 5 and a controller 1 according to the present embodiment are used. The controller 1 controls the motion of a machine connected via a motion network cable 2. The controller 1 is, for example, a PLC, a machine tool controller, a robot controller, or the like. When the controller 1 is a machine tool controller, for example, the controller 1 is connected to a servo driver 200 via the motion network cable 2 and drives a servo motor 201 connected to the servo driver 200. EtherCAT (registered trademark) is used as the motion network, for example.

The program development device 5 has a function of editing a user program and a command word according to a user operation. Further, the program development device 5 checks the codes of the edited command word and determines whether the machine to be controlled by the controller 1 operates normally. In addition, the program development device 5 builds the edited user program and command word, converts them into an executable file format, and then transfers and saves them in the controller 1.

The user can change the processing content of the command word and add a new command word by operating the program development device 5. In the program development device 5, the user can set the processing content that the user wants to realize in the command word in an interactive manner with the program development device 5. The program development device 5 generates the processing content set by the user in a high-level language such as C or C++. In addition, in the program development device 5, the user can also program the processing content that the user wants to realize in the command word in a high-level language such as C or C++.

The user program and command word edited by the user are generated after the simulation confirms that a call error of the API of the controller firmware does not occur. Moreover, since the API of the controller firmware can be executed only when the firmware is on standby, it has a configuration that retains the firmware state, accepts API processing when it is in an acceptable state, and returns an error when it is in an unacceptable state. Therefore, the firmware is prevented from entering an unauthorized state.

Thus, in the system environment in which the program development device 5 and the controller 1 according to the present embodiment are used, the user can change the processing content of the command word used for the motion control of the machine and add a new command word. In addition, the program development device 5 can implement the edited user program and command word on the controller 1 after it is confirmed that the motion control of the machine is normally performed by using the API of the controller firmware.

### §2 Configuration example

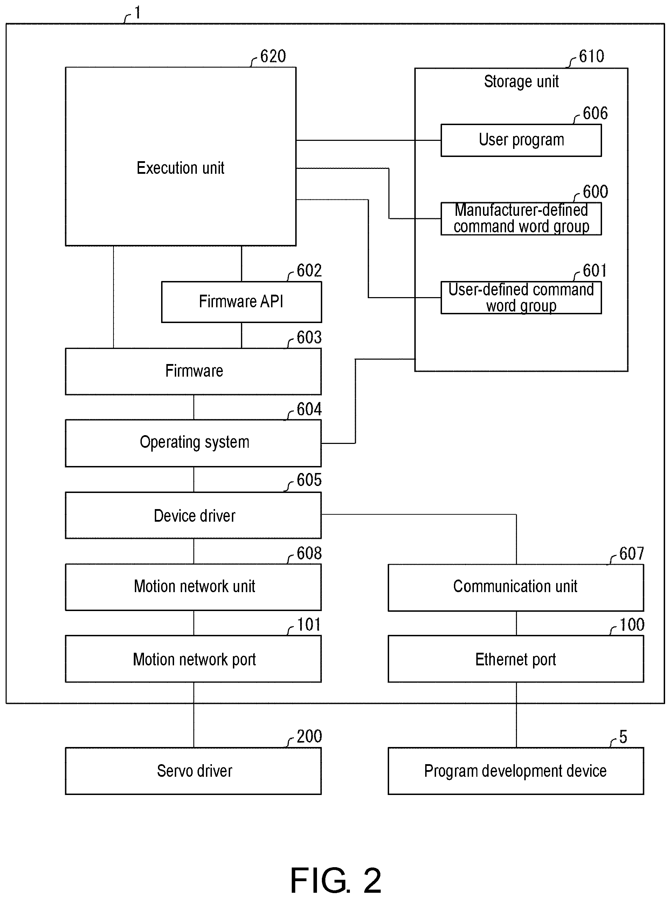

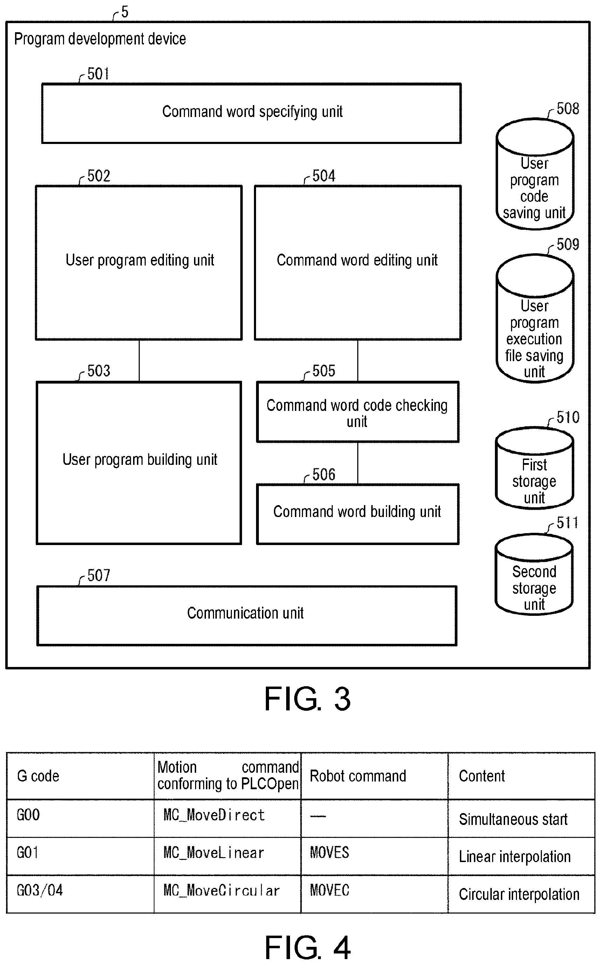

Hereinafter, the configurations of the program development device 5 and the controller 1 according to an embodiment of the invention will be described in detail with reference to FIG 1, FIG. 2, and FIG. 3. FIG. 1 is a diagram showing the outline of the system environment in which the program development device 5 and the controller 1 are used. FIG. 2 is a block diagram showing a main configuration of the controller 1. FIG. 3 is a block diagram showing a main configuration of the program development device 5.

### [Regarding the system environment]

As shown in FIG. 1, the controller 1 is connected to the servo driver 200 of the machine tool to be controlled via the motion network cable 2 and drives the servo motor 201 connected to the servo driver 200. The machine tool to be controlled by the controller 1 includes a plurality of servo drivers 200, and by driving the servo motors 201 respectively connected to the servo drivers 200, machines a machining target part. Although FIG. 1 shows a configuration in which the controller 1 controls the motion of the machine tool, the controller 1 is not limited to a controller of a machine tool, and may be a PLC or a robot controller.

In addition to the servo drivers 200, a communication coupler 202 can be connected to the controller 1 via the motion network cable 2. Although FIG. 1 shows an example in which the connection is realized by a daisy chain method, the servo drivers 200 and the communication coupler 202 may be connected by other connection methods. Further, a general-purpose analog output unit 205, a general-purpose analog input unit 204, and a general-purpose digital input/output unit 203 can exchange data with the communication coupler 202 via an internal bus.

Furthermore, a touch panel 4 is connected to the controller 1 via a network HUB 3. The touch panel 4 is an operation panel of the controller 1. The touch panel 4 may be attached to the machine tool or robot to be controlled, or may be provided separately from the machine tool or robot to be controlled.

In addition, the program development device 5 is connected to the controller 1 by an Ethernet (registered trademark) cable 301 via the network HUB 3. The program development device 5 is, for example, a general-purpose computer. The program development device 5 stores the user program executed by the controller 1 and the command word used for the motion control of the machine tool by the controller 1. Although details will be described later, the user can edit the user program and the command word to be executed in the controller 1 by operating the program development device 5.

### [Regarding the configuration of the controller 1]

As shown in FIG. 2, the controller 1 includes an interface 607 (communication unit) that transmits and receives data to and from the program development device 5, and is connected to the program development device 5 via the interface 607. The controller 1 includes a motion network unit 608 that is an interface for transmitting and receiving data to and from the servo driver 200. The motion network unit 608 communicates with the servo driver 200 via a motion network port 101.

The controller 1 includes a storage unit 610 and an execution unit 620. In addition, the controller 1 includes a firmware API (application program interface) 602, firmware 603, an operating system (OS) 604, and a device driver 605. In the following descriptions, for those that describe the functions of each unit without a special distinction between hardware and software, some or all of the functions of each unit may be executed by either hardware or software, or may be executed by collaboration between hardware and software.

The storage unit 610 stores a user program 606, a manufacturer-defined command word group 600, and a user-defined command word group 601. Each of the user program 606, the manufacturer-defined command word group 600, and the user-defined command word group 601 stores a program written in codes conforming to IEC61131-3 when the controller 1 is a PLC, and a program written in G codes standardized by ISO when the controller 1 is a motion controller of a machine tool.

The user program 606 is a program executed on the controller 1 and is a program that controls the operation of the controller 1. In other words, the controller 1 controls the motion of the machine to be controlled according to the user program.

When the controller 1 is a PLC, the user program 606 is built and stored in the storage unit 610 in a binary format. When the controller 1 is a controller of a machine tool, the CNC user program is not built, and the source code written in G codes is stored in the storage unit 610 in a text format.

The manufacturer-defined command word group 600 includes a plurality of command words, and default processing contents which are realized by the command words and associated with the respective command words. The default processing content refers to the content of processing associated with each command word, which is defined by the manufacturer that manufactures the controller 1, and is, for example, the content of processing according to the G codes conforming to the ISO standard. The control command for executing the default processing, which corresponds to the command word, is referred to as a first motion control command.

The manufacturer-defined command word group 600 includes a library, which is an execution code of the first motion control command, in a built binary format in association with each command word. In the storage unit 610, the area for storing the manufacturer-defined command word group 600 is also referred to as a first command library.

The user-defined command word group 601 includes a plurality of command words, and processing contents defined by the user, which are realized by the command words and associated with the respective command words. The control command for executing the user-defined processing, which corresponds to the command word, is referred to as a second motion control command. The user-defined command word group 601 includes a user-defined command word, which is an execution code of the second motion control command, in a built binary format in association with each command word. In the storage unit 610, the area for storing the user-defined command word group 601 is also referred to as a second command library.

The execution unit 620 loads and executes the user program and the command library stored in the storage unit 610. The execution unit 620 may be composed of, for example, a CPU as an arithmetic device and a memory. The execution unit 620 decides whether to call the default command word stored in the manufacturer-defined command word group 600 or the user-defined command word stored in the user-defined command word group 601 according to the user program.

When the controller 1 is a PLC and the user program is a compiler type program, the user program writes whether to call the execution code of the first motion control command or the execution code of the second motion control command. By executing the user program, the execution unit 620 can decide whether to call the execution code existing in the first command library or call the execution code existing in the second command library.

In addition, when the user program is a CNC user program, the execution unit 620 reads the source file of the user program line by line and executes the commands of each line in order. If the execution code corresponding to the command word written in the user program exists in the second command library, the execution unit 620 calls the execution code of the second motion control command. If the execution code corresponding to the command word written in the user program does not exist in the second command library, the execution unit 620 calls the execution code of the first motion control command from the first command library.

The firmware API 602 is called by the execution unit 620 that executes the user-defined command word. The firmware API transitions between a first state that allows calling of the execution unit 620 and a second state that does not allow calling.

When the execution unit 620 calls the execution code of the second motion control command according to the user program, the firmware API 602 is called by the execution unit 620 in order to execute the execution code of the second motion control command. However, when the execution unit 620 calls the execution code of the first motion control command according to the user program, the firmware API 602 is not called in order to execute the execution code of the first motion control command.

When the firmware API is called by the execution unit 620 to start the execution of the execution code of the second motion control command, the firmware API transitions to the second state that does not allow calling again. Furthermore, when the execution unit 620 finishes the execution of the execution code of the second motion control command, the firmware API transitions to the first state that allows calling.

The firmware 603 operates the machine to be controlled according to the motion control command executed by the execution unit 620.

The operating system 604 is the system software of the controller 1, and controls each unit of the controller 1 integrally.

The device driver 605 is software for enabling the operating system 604 to control hardware devices such as the Ethernet (registered trademark) port 100 and the motion network port 101 of the controller 1. The firmware 603 and the operating system 604 communicate with the control target such as the servo driver 200 connected to the motion network port 101 via the device driver 605 to control the control target. In addition, the operating system 604 transmits and receives data to and from the program development device 5 connected to the Ethernet (registered trademark) port 100 via the device driver 605.

The controller 1 communicates with the program development device 5 via the interface 607, and receives the execution code of the second motion control command and the source code of the second motion control command from the program development device 5. In addition, the interface 607 includes (stores) the received execution code of the second motion control command and source code of the second motion control command in the user-defined command word group 601 of the storage unit 610.

Further, the controller 1 may be configured to be connected to a plurality of program development devices 5 via the interface 607. Then, the interface 607 may transmit the execution code of the second motion control command and the source code of the second motion control command received from the program development device 5 and stored in the storage unit 610 to another program development device in response to a request from another program development device. Thereby, when a user-defined command word is used for the user program operating on the controller 1, the content of the operation can also be known by another program development device.

### [Regarding the configuration of the program development device 5]

As shown in FIG 3, the program development device 5 provides a program development environment for creating a user program that operates on the controller 1. The program development device 5 includes a user program code saving unit 508, a user program execution file saving unit 509, a first command word storage unit 510, and a second command word storage unit 511.

The user program code saving unit 508 saves the same source code as the source code written in the user program 606 of the controller 1.

The user program execution file saving unit 509 saves the same execution file as the execution file of the user program written in the user program 606 of the controller 1. Further, in this way, the source code of the user program and the execution file are separately saved in the program development device 5.

The first command word storage unit 510 (first storage unit) stores the first motion control command for executing the default processing defined by the manufacturer that manufactures the controller 1 in association with the command word. The first command word storage unit 510 stores the source code, the execution code, and the processing content corresponding to the default first motion control command included in the manufacturer-defined command word group 600 of the controller 1 in association with the command word.

The second command word storage unit 511 (second storage unit) stores the second motion control command for executing the processing defined by the user in association with the command word. The second command word storage unit 511 stores the source code, the execution code, and the processing content corresponding to the user-defined second motion control command included in the user-defined command word group 601 in association with the command word.

In this way, the source codes included in the user program 606, the manufacturer-defined command word group 600, and the user-defined command word group 601 of the controller 1 and the codes corresponding to the execution codes are saved in the program development device 5.

Here, the motion control command will be described. FIG. 4 is a comparison table showing the codes based on each standard and the default processing contents thereof. (a) and (c) of FIG 5 show an example of the user program using each code. As shown in FIG. 4, the motion control command may have a code indicating processing of the same content, corresponding to each of the command using G code, the command conforming to IEC61131-3, and the command using the robot language. For example, G01 using G code, MC_MoveLinear using a code conforming to IEC61131-3, and MOVES using the robot language are all commands (command words) indicating the operation of linear interpolation.

The user program is created by using these commands as shown in (a) and (c) of FIG. 5. (a) of FIG. 5 shows an example of the source file of the user program using G code. As shown in (a) of FIG. 5, in the user program using G code, the command is described in each line. The command in the 001 line commands to perform linear interpolation (straight line movement) to the position of X100 and Y100, and the command in the 002 line commands to perform linear interpolation to the position of X100 and Y200.

Each command of G code has one set of processing flow such as setting the destination coordinates, specifying the moving speed, starting the movement, and waiting until the movement is completed. The entire processing flow is completed, and one command ends.

(b) of FIG. 5 is a diagram showing a locus of movement of a tool of a machine tool in an XY coordinate system when the user program shown in (a) of FIG. 5 is executed by the execution unit 620 of the controller 1. The execution unit 620 of the controller 1 moves the tool of the machine tool as shown by the arrow in (b) of FIG 5 by reading the source code shown in (a) of FIG. 5 line by line and executing the command of each line in order.

Furthermore, (c) of FIG. 5 shows an example of the source file of the user program using codes conforming to IEC61131-3. In the user program using IEC61131-3, it is possible to specify the speed, acceleration, deceleration, and jerk in addition to the direction of movement by commands. The example shown in (c) of FIG. 5 is a source file that commands to perform linear interpolation to the position of X100 and Y100 and then perform linear interpolation to the position of X100 and Y200, as the user program using G code shown in (a) of FIG. 5. In the user program using IEC61131-3, control is further performed to move the tool of the machine tool at a speed of 10 mm/s, acceleration of 100 mm/s², deceleration of 100 mm/s², and jerk of 0.

The program development device 5 includes a command word specifying unit 501, a user program editing unit 502, a user program building unit 503 (first building unit), a command word editing unit 504, a command word code checking unit 505, and a command word building unit 506 (second building unit). The user program editing unit 502 and the command word editing unit 504 are also collectively referred to as an editing unit. Further, the program development device 5 includes a communication unit 507.

The command word specifying unit 501 accepts an instruction of the user as to whether to prioritize the first motion control command or the second motion control command as the processing of the command word written in the source code of the user program executed by the controller 1. Thereby, the command word specifying unit 501 specifies whether to set the motion control command corresponding to the command word executed by the controller 1 to the default first motion control command or the user-defined second motion control command.

The user program editing unit 502 edits the user program according to the instruction of the user. The user can edit the source code of the user program stored in the user program code saving unit 508. The user program stored in the user program code saving unit 508 may be overwritten or may be stored as a revision.

The user program building unit 503 builds the source code of the user program. The user program building unit 503 compiles the user program into a binary (machine language) file and links it to the library. In the case of a CNC user program written in G code, it does not require building, so the user program building unit 503 does not perform building. The user program building unit 503 builds a PLC user program using codes conforming to IEC61131-3, or a robot control user program using a robot command word.

The user program building unit 503 builds the source code in association with the second motion control command if the second motion control command corresponding to the command word written in the source code of the user program exists in the second command word storage unit 511. Further, the user program building unit 503 builds the source code in association with the first motion control command if the second motion control command corresponding to the command word written in the source code of the user program does not exist in the second command word storage unit 511.

The user program building unit 503 builds the source code based on the prioritized control command specified by the command word specifying unit 501. The user program building unit 503 builds the source code in association with the first motion control command if the first motion control command is prioritized, and builds the source code in association with the second motion control command if the second motion control command is prioritized.

The operation of the user program building unit 503 when the second motion control command is specified to be prioritized will be described. The user program building unit 503 builds the source code in association with the second motion control command if the second motion control command corresponding to the command word written in the source code of the user program exists in the second command word storage unit 511. Further, the user program building unit 503 builds the source code in association with the first motion control command if the second motion control command corresponding to the command word written in the source code of the user program does not exist in the second command word storage unit 511. That is, for example, if the user-defined MC_MoveLinear exists for the command word called MC _MoveLinear written in the user program, the user program is linked to the user-defined second motion control command. If the user-defined MC _MoveLinear does not exist for the command word called MC_MoveLinear, the user program is linked to the default second motion control command.

The command word editing unit 504 edits the motion control command stored in association with the command word in the first command word storage unit 510 or the second command word storage unit 511 according to the instruction of the user.

The motion control command edited by the command word editing unit 504 is stored in the second command word storage unit 511 as the second motion control command.

The command word code checking unit 505 functions as a compiler that checks the code of the motion control command edited by the command word editing unit 504. The function of the command word code checking unit 505 may be provided in the command word building unit 506.

The command word building unit 506 builds the second motion control command. The command word building unit 506 performs building regardless of whether the second motion control command is based on G code, codes conforming to IEC61131-3, or a robot command word.

The communication unit 507 communicates with the controller 1. The communication unit 507 transmits the execution code of the second motion control command and the source code of the second motion control command to the controller 1. Further, the communication unit 507 may request the controller 1 to transmit the execution code of the second motion control command and the source code of the second motion control command, and receive the execution code of the second motion control command and the source code of the second motion control command from the controller 1.

### [Regarding editing of the processing flow in the program development device 5]

FIG. 6 is a diagram showing an example of a display screen 551 at the time of editing of the processing flow in the program development device 5. On the display screen 551, selection buttons (processing A, processing B, processing C, processing D, etc.) indicating the typical processings may be displayed. In addition, the display screen 551 may display a control processing button 552 for inputting an arrow indicating the processing flow, a conditional branch, a text for comment, etc.

When the user selects the processing that the user desires to edit from the selection buttons indicating the typical processings, the flow related to the processing is displayed on a flow display editing unit 550. The user can operate the control processing button 552 on the flow displayed by the flow display editing unit 550 to make changes such as adding a processing, deleting a processing, and changing the processing content. In addition, the user can also input a new processing name to generate the code of a command word.

### [Regarding the flow of editing of the processing flow]

FIG. 7 is a flowchart showing a flow of editing of the processing flow.

### (Step S1)

The user sets (specifies) the command word to be edited by operating the program development device 5. The user may be able to set the command word to be edited by either the name or the number. For example, when editing the processing of G01, the user performs an operation of setting G01 on the program development device 5. The user may be able to set the command word to be edited to G01 by performing an operation of inputting or selecting G01 as the target command word to be edited on the processing flow editing screen of the program development device 5, for example.

### (Step S2)

The program development device 5 determines whether the command word set by the user is new. For example, when the command word set by the user is G01, the command word is a default command word of G code, and therefore the program development device 5 determines that the command word set by the user is not new (NO in step S2) and proceeds to step S3. When the program development device 5 determines that the command word set by the user is new (YES in step S2), the program development device 5 proceeds to step S5.

### (Step S3)

The program development device 5 displays the default processing flow of the command word set by the user on the flow display editing unit 550 of the display screen 551.

### (Step S4)

The user specifies a part to be changed in the processing flow displayed on the flow display editing unit 550.

### (Step S5)

The program development device 5 displays a screen for creating and editing a new processing flow on the display screen 551. As shown in FIG. 6, the display screen 551 displays the selection buttons indicating the typical processings, the control processing button 552, and the flow display editing unit 550.

### (Step S6)

The user creates the processing flow corresponding to the newly set command word on the display screen 551.

In step S4 and step S6, the user selects an icon displayed on the display screen 551, adds or deletes a processing, edits the content, and creates or edits the processing flow.

### (Step S7)

The program development device 5 automatically generates the source code (for example, source code written in a high-level language) corresponding to the processing flow created or edited in step S4 or step S6 by the function of the editing unit. For example, the program development device 5 stores in advance the source code written in a high-level language corresponding to the processing flow.

### (Step S8)

With respect to a processing to be changed in the processing flow created or edited in step S4 and step S6, the user may additionally implement (edit) the content by using a high-level language such as C or C++.

### (Step S9)

The program development device 5 checks the grammar of the code implemented in step S8 by the function of the editing unit.

### (Step S10)

The program development device 5 builds the code created, edited, or implemented by the function of the command word building unit 506.

### (Step S11)

The program development device 5 confirms by simulation on the program development device 5 that the second motion control command of the built user-defined command word does not cause a call error of the firmware API 602 of the controller 1.

### (Step S12)

The program development device 5 determines whether no call error of the firmware API 602 of the controller 1 occurs. The program development device 5 proceeds to step S14 if no error occurs (YES in step S12). The program development device 5 proceeds to step S13 if an error occurs (NO in step S12).

### (Step S13)

The program development device 5 displays a part to be corrected on the display screen 551, returns to step S8, and requests a correction from the user.

### (Step S14)

The program development device 5 completes the creation, editing, or additional implementation of the command word, and ends the processing. The program development device 5 transmits the second motion control command corresponding to the completed command word to the controller 1 via the communication unit 507 in association with the command word.

Thus, in the program development device 5, the command word that has been created, edited, or additionally implemented is transmitted to the controller 1 after it is confirmed that a call error of the firmware API 602 does not occur. Thus, with the program development device 5, it is possible to create a new command word and edit the default command word, and it is also possible to prevent these user-defined command words from affecting the behavior of the controller 1 and the control performed by the controller 1.

In addition, the user can interactively set the creation of a new command word and the editing of the default command word by using the icon or the like displayed on the display screen 551 of the program development device 5, and furthermore, since the source code is automatically generated, the user can easily generate a user-defined command word. Further, since the user can additionally implement the processing to be changed by using a high-level language with respect to the processing flow of the command word, the user can accurately realize the control that the user desires to realize by the controller 1.

FIG. 8 is a diagram showing an example of a default processing flow displayed on the flow display editing unit 550. FIG. 9 is a diagram showing an example of a user-defined processing flow displayed on the flow display editing unit 550 after the user has changed the processing flow shown in FIG. 8.

As shown in FIG. 8, the processing flow defined by one command word (for example, G01 or MC_MoveLinear) includes a plurality of processes P1 to P5 such as setting the target position (process P1), setting the target speed (process P2), starting the operation (process P3), waiting for completion of the operation (process P4), and completing the operation (process P5). By operating the program development device 5, the user can also edit the respective parameters of the processes P1 to P5, and can also rearrange the order of the processes, delete the processes, and add new processes.

For example, as shown in FIG. 9, after setting the target position (process P1), setting the target speed (process P2), starting the operation (process P3), and waiting for completion of the operation (process P4), the user can also edit to add processing for setting the second target position (process P15), starting the second operation (process P16), and waiting for completion of the second operation (process P 17).

In this way, the command word defined by the user is transferred to the controller 1 via the communication unit 507 and stored in the storage unit 610 of the controller 1.

If it is specified to prioritize the user-defined second motion control command, as described above, the execution unit 620 preferentially uses the command word stored in the user-defined command word group 601 to execute the motion control command.

Steps S7 to S8 (direct editing in a high-level language) can be omitted. Steps S9 or S11 to S12 can be omitted. Furthermore, steps S3 to S6 may be omitted and steps S7 to S8 may be performed to directly edit the processing flow corresponding to the command word in a high-level language.

### [Regarding the function of the firmware API]

By the way, there is a technique that makes it possible to call a C language application program, which operates on a microprocessor different from a ladder language application program, as a function from the ladder language application program used in PLC.

When a C language application program is called as a function from an application program executed on PLC as in the above technique, the memory area used by the firmware may be specified by a pointer and data may be written. In such a case, there is a problem that the operation of the firmware may become unstable. In addition, in the conventional technique, no countermeasures have been taken for the influence on the firmware and the operating system, and the operation of the PLC may become unstable.

In the present embodiment, the execution of the second motion control command is controlled by the function of the firmware API (application program interface) 602, thereby preventing the second motion control command from adversely affecting the firmware and the operating system.

FIG. 10 is a diagram schematically showing a flow of processing of the firmware API 602. As shown in FIG. 10, the firmware API 602 has a function of transitioning between states of initializing (step S101), standing by (step S102), and finishing (step S105).

### (Step S101)

The execution unit 620 of the controller 1 calls the firmware API 602 in order to execute the execution code of the second motion control command according to the user program. The firmware API 602 transitions the state from initializing to standing by.

### (Step S102)

The firmware API 602 is in the first state that allows calling only at the time of standing by.

### (Step S103)

The firmware API 602 is called while standing by, and when the execution code of the second motion control command is being executed, the firmware API 602 transitions to the second state that does not allow calling. The firmware API 602 that is called in the second state causes a call error.

When the execution code of the second motion control command finishes, the firmware API 602 transitions to the state of standing by (step S102).

### (Step S104)

If an abnormality of the firmware API 602 or an abnormality of the execution code of the second motion control command occurs when the execution code of the second motion control command is being executed, the firmware API 602 stops the processing. When the stopping processing finishes, the firmware API 602 transitions to the state of standing by (step S102).

### (Step S105)

The firmware API 602 terminates the function when the operation of the execution unit 620 of the controller 1 stops.

### (Step S120)

Further, if an error occurs in the firmware 603, the firmware API 602 transitions to the second state that does not allow calling. The firmware API 602 maintains the second state and does not allow calling until the error in the firmware 603 is cleared.

Thus, in the present embodiment, the firmware API 602 transitions to the second state that does not allow the firmware API 602 to be called during execution of the execution code of the second motion control command or occurrence of an error in the firmware 603. Thereby, it is possible to prevent unauthorized use of the firmware API 602, and prevent the firmware 603 and the operating system 604 from losing control or being deadlocked.

### [Example of implementation by software]

The control blocks of the controller 1 (particularly, the execution unit 620, the firmware 603, and the firmware API 602), and the control blocks of the program development device 5 (particularly, the command word specifying unit 501, the user program editing unit 502, the user program building unit 503, the command word editing unit 504, the command word code checking unit 505, and the command word building unit 506) may be realized by logic circuits (hardware) formed in an integrated circuit (IC chip) or the like, or may be realized by software.

In the latter case, the controller 1 and the program development device 5 include a computer that executes the commands of the program, which is software that realizes each function. The computer includes, for example, one or more processors and a computer-readable recording medium that stores the program. Then, in the computer, the processor reads the program from the recording medium and executes it, thereby achieving the object of the invention. For example, a CPU (Central Processing Unit) can be used as the processor. In addition to "non-transient tangible media" such as ROM (Read Only Memory), tapes, disks, cards, semiconductor memories, programmable logic circuits, or the like can be used as the recording medium. Further, a RAM (Random Access Memory) for developing the program may be further provided. Further, the program may be supplied to the computer via an arbitrary transmission medium (communication network, broadcast wave, etc.) capable of transmitting the program. One aspect of the invention can also be realized in the form of a data signal embedded in a carrier wave, in which the program is embodied by electronic transmission.

### [Summary]

A program development device according to one aspect of the invention is for creating a user program operating on a controller that controls motion of a machine. The program development device includes a first storage unit that stores a default first motion control command in association with a command word; and an editing unit that edits a motion control command corresponding to the command word according to an instruction of the user.

According to the above configuration, the motion control command for controlling the motion of the machine is edited in association with the command word according to the instruction of the user. Thus, it is possible for the user to change the processing content of the command word used for the motion control of the machine and add a new command word.

Further, the program development device according to the invention includes a second storage unit that stores the edited motion control command as a second motion control command in association with the command word.

According to the above configuration, the second motion control command for executing the user-defined processing is saved separately from the default first motion control command in association with the command word without rewriting the default first motion control command.

In addition, the program development device according to the invention includes a first building unit that builds a source code of the user program, and a second building unit that builds the second motion control command. The first building unit builds the source code in association with the second motion control command if the second motion control command corresponding to the command word written in the source code exists in the second storage unit, and builds the source code in association with the first motion control command if the second motion control command corresponding to the command word written in the source code does not exist in the second storage unit.

According to the above configuration, if the second motion control command exists in the second storage unit, the source code of the user program is built in association with the second motion control command. Thus, if the user-defined second motion control command exists, the user program automatically executes the second motion control command. Therefore, by creating the second motion control command, the user can execute the second motion control command without separately specifying which of the first motion control command and the second motion control command is to be executed.

Further, the program development device according to the invention includes a first building unit that builds a source code of the user program, a second building unit that builds the second motion control command, and a command word specifying unit that accepts the instruction of the user as to whether to prioritize the first motion control command or the second motion control command as processing of the command word written in the source code. The first building unit builds the source code in association with the first motion control command if the first motion control command is prioritized, and builds the source code in association with the second motion control command if the second motion control command is prioritized.

According to the above configuration, the user can specify whether to prioritize the first motion control command or the second motion control command by the user operation. Thus, the user can also configure to be able to specify each time whether to execute the motion according to the first motion control command or execute the motion according to the second motion control command according to the parts to be made in the machine tool, for example.

Further, a controller according to one aspect of the invention is for controlling motion of a machine according to a user program. The controller includes an execution unit that executes the user program; a first command library that stores an execution code of a default first motion control command, corresponding to a command word; and a second command library that stores an execution code of a second motion control command, which is defined by a user, corresponding to the command word. The execution unit decides whether to call the execution code of the first motion control command or the execution code of the second motion control command according to the user program.

According to the above configuration, it is possible to control the motion of the machine by calling either the execution code of the default first motion control command or the execution code of the user-defined second motion control command. Therefore, by calling the execution code of the second motion control command defined by the user, it is possible to enable the machine to execute the motion desired by the user.

Further, the controller according to one aspect of the invention includes a firmware API (application program interface) that transitions between a first state that allows calling and a second state that does not allow calling. The execution unit calls the firmware API in order to execute the execution code of the second motion control command if the execution code of the second motion control command is called according to the user program, and does not call the firmware API in order to execute the execution code of the first motion control command if the execution code of the first motion control command is called according to the user program.

According to the above configuration, with the firmware API, the memory area used by the firmware is specified by execution of the execution code of the second motion control command, and the operation of the firmware can be prevented from becoming unstable.

Further, in the controller according to one aspect of the invention, the firmware API transitions to the second state when starting execution of the execution code of the second motion control command, and transitions to the first state when finishing execution of the execution code of the second motion control command.

According to the above configuration, since the firmware API is not allowed to be called during execution of the execution code of the second motion control command or occurrence of an error in the firmware, it is possible to prevent unauthorized use of the firmware API, and prevent the firmware and the operating system from losing control or being deadlocked.

Further, in the controller according to one aspect of the invention, the execution unit calls the execution code of the second motion control command if the execution code corresponding to the command word written in the user program exists in the second command library, and calls the execution code of the first motion control command if the execution code corresponding to the command word written in the user program does not exist in the second command library.

According to the above configuration, the execution code of the second motion control command existing in the second command library can is called and executed. Therefore, the motion of the machine to be controlled can be controlled by the second motion control command corresponding to the user-defined command word.

In addition, the controller according to one aspect of the invention may include a communication unit that communicates with a program development device which creates the user program. The communication unit receives the execution code of the second motion control command and a source code of the second motion control command from the program development device, and stores the execution code of the second motion control command and the source code of the second motion control command in the second command library, and transmits the execution code of the second motion control command and the source code of the second motion control command stored in the second command library to another program development device in response to a request from the another program development device.

According to the above configuration, when the user-defined command word is used for the user program operating on the controller, the content of the operation can be known by another program development device.

The invention is not limited to the above-described embodiments, and it is possible to make various modifications within the scope of the claims.

### [Descriptions of Reference Numerals]

1 controller
5 program development device
501 command word specifying unit
502 user program editing unit (editing unit)
503 user program building unit
504 command word editing unit (editing unit)
505 command word code checking unit
506 command word building unit
507 communication unit
508 user program code saving unit
509 user program execution file saving unit
510 first command word storage unit (first storage unit)
511 second command word storage unit (second storage unit)
602 firmware API
604 operating system
605 device driver
606 user program
607 interface (communication unit)
610 storage unit
620 execution unit

## Claims

1. A program development device (5) for creating a user program operating on a controller (1) that controls motion of a machine, the program development device (5) comprising:
a first storage unit (510) that stores a default first motion control command in association with a command word;
an editing unit (502, 504) that edits a motion control command corresponding to the command word according to an instruction of a user,
wherein the first motion control command is a command for executing a default processing defined by a manufacturer that manufactures the controller in association with the command word, and that the edited motion control command is a command for executing a processing defined by the user in association with the command word; and
a second storage unit (511) that stores the edited motion control command as a second motion control command in association with the command word;
the program development device (5) is **characterized by** further comprising:
a first building unit (503) that builds a source code of the user program; and
a second building unit (506) that builds the second motion control command,
wherein the first building unit (503):
builds the source code in association with the second motion control command if the second motion control command corresponding to the command word written in the source code exists in the second storage unit (511), and
builds the source code in association with the first motion control command if the second motion control command corresponding to the command word written in the source code does not exist in the second storage unit (511).

2. A controller (1) for controlling motion of a machine according to a user program, the controller comprising:
an execution unit (620) that executes the user program;
a first command library that stores an execution code of a default first motion control command, corresponding to a command word; and
a second command library that stores an execution code of a second motion control command, which is defined by a user, corresponding to the command word, wherein the first motion control command is a command for executing a default processing defined by a manufacturer that manufactures the controller in association with the command word and that the second motion control command is a command for executing a processing defined by the user in association with the command word,
wherein the execution unit (620) decides whether to call the execution code of the first motion control command or the execution code of the second motion control command according to the user program,
the controller (1) is **characterized by** further comprising:
a firmware application program interface, API (602);
wherein the execution unit (620):
calls the firmware API (602) in order to execute the execution code of the second motion control command if the execution code of the second motion control command is called according to the user program, and
does not call the firmware API (602) in order to execute the execution code of the first motion control command if the execution code of the first motion control command is called according to the user program, wherein the firmware API, while executing the second motion control command, does not allow to be called again until the execution is completed.

3. The controller (1) according to claim 2, wherein the firmware API (602) is not allowed to be called when starting execution of the execution code of the second motion control command, and is allowed to be called when finishing execution of the execution code of the second motion control command.

4. The controller (1) according to claim 2 or 3, wherein the execution unit (620):
calls the execution code of the second motion control command if the execution code corresponding to the command word written in the user program exists in the second command library, and
calls the execution code of the first motion control command if the execution code corresponding to the command word written in the user program does not exist in the second command library.

5. The controller (1) according to any one of claims 2 to 4, comprising:
a communication unit (607) that communicates with a program development device (5) which creates the user program,
wherein the communication unit (607):
receives the execution code of the second motion control command and a source code of the second motion control command from the program development device (5), and stores the execution code of the second motion control command and the source code of the second motion control command in the second command library, and
transmits the execution code of the second motion control command and the source code of the second motion control command stored in the second command library to another program development device in response to a request from the another program development device.

## Patentansprüche

1. Programmentwicklungsvorrichtung (5) zum Erzeugen eines Benutzerprogramms, das auf einer Steuerung (1) arbeitet, die die Bewegung einer Maschine steuert, wobei die Programmentwicklungsvorrichtung (5) umfasst:
eine erste Speichereinheit (510), die einen vorgegebenen ersten Bewegungssteuerungsbefehl in Verbindung mit einem Befehlswort speichert;
eine Editiereinheit (502, 504), die einen Bewegungssteuerungsbefehl, der dem Befehlswort entspricht, gemäß einer Anweisung eines Benutzers, editiert,
wobei der erste Bewegungssteuerungsbefehl ein Befehl zum Ausführen einer Standardverarbeitung ist, die von einem Hersteller, der die Steuerung herstellt, in Verbindung mit dem Befehlswort definiert wird, und dass der editierte Bewegungssteuerungsbefehl ein Befehl zum Ausführen einer Verarbeitung ist, die von dem Benutzer in Verbindung mit dem Befehlswort definiert wird; und
eine zweite Speichereinheit (511), die den editierten Bewegungssteuerungsbefehl als einen zweiten Bewegungssteuerungsbefehl in Verbindung mit dem Befehlswort speichert;
die Programmentwicklungsvorrichtung (5) **dadurch gekennzeichnet ist, dass** sie ferner umfasst:
eine erste Aufbaueinheit (503), die einen Quellcode des Benutzerprogramms aufbaut; und
eine zweite Aufbaueinheit (506), die den zweiten Bewegungssteuerungsbefehl aufbaut, wobei die erste Aufbaueinheit (503):
den Quellcode in Verbindung mit dem zweiten Bewegungssteuerungsbefehl aufbaut, wenn der zweite Bewegungssteuerungsbefehl, der dem in den Quellcode geschriebenen Befehlswort entspricht, in der zweiten Speichereinheit (511) existiert, und
den Quellcode in Verbindung mit dem ersten Bewegungssteuerungsbefehl aufbaut, wenn der zweite Bewegungssteuerungsbefehl, der dem in den Quellcode geschriebenen Befehlswort entspricht, nicht in der zweiten Speichereinheit (511) existiert.

2. Steuerung (1) zum Steuern der Bewegung einer Maschine gemäß einem Benutzerprogramm, wobei die Steuerung umfasst:
eine Ausführungseinheit (620), die das Benutzerprogramm ausführt;
eine erste Befehlsbibliothek, die einen Ausführungscode eines ersten Standard-Bewegungssteuerungsbefehls speichert, der einem Befehlswort entspricht; und
eine zweite Befehlsbibliothek, die einen Ausführungscode eines zweiten Bewegungssteuerungsbefehls speichert, der von einem Benutzer definiert wird und dem Befehlswort entspricht, wobei der erste Bewegungssteuerungsbefehl ein Befehl zum Ausführen einer Standardverarbeitung ist, die von einem Hersteller, der die Steuerung herstellt, in Verbindung mit dem Befehlswort definiert wird, und dass der zweite Bewegungssteuerungsbefehl ein Befehl zum Ausführen einer vom Benutzer definierten Verarbeitung in Verbindung mit dem Befehlswort ist,
wobei die Ausführungseinheit (620) entscheidet, ob sie den Ausführungscode des ersten Bewegungssteuerungsbefehls oder den Ausführungscode des zweiten Bewegungssteuerungsbefehls gemäß dem Benutzerprogramm aufruft,
die Steuerung (1) **dadurch gekennzeichnet ist, dass** sie ferner umfasst:
eine Firmware-Anwendungsprogramm-Schnittstelle, API (602);
wobei die Ausführungseinheit (620):
die Firmware-API (602) aufruft, um den Ausführungscode des zweiten Bewegungssteuerungsbefehls auszuführen, wenn der Ausführungscode des zweiten Bewegungssteuerungsbefehls gemäß dem Benutzerprogramm aufgerufen wird, und
die Firmware-API (602) nicht aufruft, um den Ausführungscode des ersten Bewegungssteuerungsbefehls auszuführen, wenn der Ausführungscode des ersten Bewegungssteuerungsbefehls gemäß dem Benutzerprogramm aufgerufen wird, wobei die Firmware-API, während Ausführens des zweiten Bewegungssteuerungsbefehls nicht erlaubt erneut aufgerufen zu werden bis die Ausführung abgeschlossen ist.

3. Steuerung (1) gemäß Anspruch 2, wobei die Firmware-API (602) beim Starten der Ausführung des Ausführungscodes des zweiten Bewegungssteuerungsbefehls nicht aufgerufen werden darf und beim Beenden der Ausführung des Ausführungscodes des zweiten Bewegungssteuerungsbefehls aufgerufen werden darf.

4. Steuerung (1) gemäß Anspruch 2 oder 3, wobei die Ausführungseinheit (620):
den Ausführungscode des zweiten Bewegungssteuerungsbefehls aufruft, wenn der Ausführungscode, der dem im Benutzerprogramm geschriebenen Befehlswort entspricht, in der zweiten Befehlsbibliothek existiert, und
den Ausführungscode des ersten Bewegungssteuerungsbefehls aufruft, wenn der Ausführungscode, der dem in dem Anwenderprogramm geschriebenen Befehlswort entspricht, nicht in der zweiten Befehlsbibliothek vorhanden ist.

5. Steuerung (1) gemäß einem der Ansprüche 2 bis 4, umfassend:
eine Kommunikationseinheit (607), die mit einer Programmentwicklungsvorrichtung (5) kommuniziert, die das Benutzerprogramm erstellt,
wobei die Kommunikationseinheit (607):
den Ausführungscode des zweiten Bewegungssteuerungsbefehls und einen Quellcode des zweiten Bewegungssteuerungsbefehls von der Programmentwicklungsvorrichtung (5) empfängt, und den Ausführungscode des zweiten Bewegungssteuerungsbefehls und den Quellcode des zweiten Bewegungssteuerungsbefehls in der zweiten Befehlsbibliothek speichert, und
den Ausführungscode des zweiten Bewegungssteuerungsbefehls und den Quellcode des zweiten Bewegungssteuerungsbefehls, die in der zweiten Befehlsbibliothek gespeichert sind, an eine andere Programmentwicklungsvorrichtung als Reaktion auf eine Anforderung von der anderen Programmentwicklungsvorrichtung überträgt.

## Revendications

1. Dispositif de développement de programme (5) destiné à créer un programme utilisateur fonctionnant sur un dispositif de commande (1) qui commande un mouvement d'une machine, le dispositif de développement de programme (5) comprenant :
une première unité de stockage (510) qui stocke un premier ordre de commande de mouvement par défaut en association avec un mot d'ordre ;
une unité de modification (502, 504) qui modifie un ordre de commande de mouvement correspondant au mot d'ordre en fonction d'une instruction d'un utilisateur,
dans lequel le premier ordre de commande de mouvement est un ordre d'exécution d'un traitement par défaut défini par un fabricant qui fabrique le dispositif de commande en association avec le mot d'ordre, et l'ordre de commande de mouvement modifié est un ordre d'exécution d'un traitement défini par l'utilisateur en association avec le mot d'ordre ; et
une deuxième unité de stockage (511) qui stocke l'ordre de commande de mouvement modifié en tant que deuxième ordre de commande de mouvement en association avec le mot d'ordre ;
le dispositif de développement de programme (5) est **caractérisé en ce qu'**il comprend en outre :
une première unité de construction (503) qui construit un code source du programme utilisateur ; et
une deuxième unité de construction (506) qui construit le deuxième ordre de commande de mouvement,
dans lequel la première unité de construction (503) :
construit le code source en association avec le deuxième ordre de commande de mouvement si le deuxième ordre de commande de mouvement correspondant au mot d'ordre écrit dans le code source existe dans la deuxième unité de stockage (511), et
construit le code source en association avec le premier ordre de commande de mouvement si le deuxième ordre de commande de mouvement correspondant au mot d'ordre écrit dans le code source n'existe pas dans la deuxième unité de stockage (511).

2. Dispositif de commande (1) pour commander un mouvement d'une machine en fonction d'un programme utilisateur, le dispositif de commande comprenant :
une unité d'exécution (620) qui exécute le programme utilisateur ;
une première bibliothèque d'ordres qui stocke un code d'exécution d'un premier ordre de commande de mouvement par défaut, correspondant à un mot d'ordre ; et
une deuxième bibliothèque d'ordres qui stocke un code d'exécution d'un deuxième ordre de commande de mouvement, qui est défini par un utilisateur, correspondant au mot d'ordre, dans lequel le premier ordre de commande de mouvement est un ordre d'exécution d'un traitement par défaut défini par un fabricant qui fabrique le dispositif de commande en association avec le mot d'ordre, et le deuxième ordre de commande de mouvement est un ordre d'exécution d'un traitement défini par l'utilisateur en association avec le mot d'ordre,
dans lequel unité d'exécution (620) décide s'il faut appeler le code d'exécution du premier ordre de commande de mouvement ou le code d'exécution du deuxième ordre de commande de mouvement en fonction du programme utilisateur,
le dispositif de commande (1) est **caractérisé en ce qu'**il comprend en outre :
une interface de programme d'application, API, de micrologiciel (602) ;
dans lequel unité d'exécution (620) :
appelle l'API de micrologiciel (602) pour exécuter le code d'exécution du deuxième ordre de commande de mouvement si le code d'exécution du deuxième ordre de commande de mouvement est appelé en fonction du programme utilisateur, et
n'appelle pas l'API de micrologiciel (602) pour exécuter le code d'exécution du premier ordre de commande de mouvement si le code d'exécution du premier ordre de commande de mouvement est appelé en fonction du programme utilisateur, dans lequel l'API de micrologiciel, pendant l'exécution du deuxième ordre de commande de mouvement, n'autorise pas d'être appelée à nouveau avant l'achèvement de l'exécution.

3. Dispositif de commande (1) selon la revendication 2, dans lequel l'API de micrologiciel (602) n'est pas autorisée à être appelée lorsqu'une exécution du code d'exécution du deuxième ordre de commande de mouvement est commencée, et est autorisée à être appelée lorsqu'une exécution du code d'exécution du deuxième ordre de commande de mouvement est achevée.

4. Dispositif de commande (1) selon la revendication 2 ou 3, dans lequel l'unité d'exécution (620) :
appelle le code d'exécution du deuxième ordre de commande de mouvement si le code d'exécution correspondant au mot d'ordre écrit dans le programme d'utilisateur existe dans la deuxième bibliothèque d'ordres, et
appelle le code d'exécution du premier ordre de commande de mouvement si le code d'exécution correspondant au mot d'ordre écrit dans le programme d'utilisateur n'existe pas dans la deuxième bibliothèque d'ordres.

5. Dispositif de commande (1) selon l'une quelconque des revendications 2 à 4, comprenant :
une unité de communication (607) qui communique avec un dispositif de développement de programme (5) qui crée le programme utilisateur,
dans lequel l'unité de communication (607) :
reçoit le code d'exécution du deuxième ordre de commande de mouvement et un code source du deuxième ordre de commande de mouvement depuis le dispositif de développement de programme (5), et stocke le code d'exécution du deuxième ordre de commande de mouvement et le code source du deuxième ordre de commande de mouvement dans la deuxième bibliothèque d'ordres, et
transmet le code d'exécution du deuxième ordre de commande de mouvement et le code source du deuxième ordre de commande de mouvement stockés dans la deuxième bibliothèque d'ordres à un autre dispositif de développement de programme en réponse à une demande de l'autre dispositif de développement de programme.
